# EUROPEAN PATENT SPECIFICATION

(11) **EP 2 479 954 B1**
(45) Date of publication and mention of the grant of the patent: **16.03.2016**
(21) Application number: 10816606.7
(22) Date of filing: 18.06.2010
(51) Int. Cl.: H04L 29/06

(54) **METHOD AND SYSTEM FOR SET-TOP BOX TO REALIZE CALL TRANSFER BASED ON SIP**
VERFAHREN UND SYSTEM FÜR EINE SET-TOP-BOX ZUR DURCHFÜHRUNG SIP-BASIERTER RUFÜBERTRAGUNGEN
PROCÉDÉ ET SYSTÈME PERMETTANT À UN BOÎTIER DÉCODEUR DE RÉALISER UN TRANSFERT D'APPEL BASÉ SUR LE PROTOCOLE SIP

(30) Priority: 16.09.2009 CN 200910173419
(43) Date of publication of application: 25.07.2012
(73) Proprietor: ZTE Corporation, Shenzhen, Guangdong 518057 (CN)
(72) Inventor: LIU, Fu, Shenzhen Guangdong 518057 (CN); CHEN, Pengfei, Shenzhen Guangdong 518057 (CN)
(74) Representative: Tischner, Oliver
(86) International application number: PCT/CN2010/074041
(87) International publication number: WO 2011/032402

(56) References cited:
- CN-A- 101 107 830
- CN-A- 101 431 737
- CN-A- 101 662 472
- US-A1- 2007 250 845
- US-A1- 2008 175 229
- US-A1- 2009 219 953

## Description

### TECHNICAL FIELD

The disclosure relates to the field of an Internet Protocol (IP) Multimedia Subsystem (IMS), particularly to a method and system for performing a call transfer by a visual communication Set-Top Box (STB).

### BACKGROUND

An IMS refers to an IP multimedia subsystem. To be more exact, the IMS is a newly added core network subsystem after 3G R5 standard. For the IMS serving as a multimedia call/session control system, key protocols include a Session Initiation Protocol (SIP).

Specifically, the IMS consists of: Call Session Control Function (CSCF), Home Subscriber Server (HSS), Subscriber Locator Function (SLF), Application Server (AS), Media Gateway Control Function (MGCF), IP Multimedia Subsystem Media Gateway (IMS-MGW), Multimedia Resource Function Controller (MRFC), Multimedia Resource Function Processor (MRFP), Breakout Gateway Control Function (BGCF), Interworking Gateway Control Function (IGCF), Translation Gateway (TrGW), Policy Decision Function (PDF), Application Function (AF) and the like entities.

At present, as multimedia real-time service applications (for example, voice, video, instant messaging) are increasingly used on internet, a series of call control protocols which can accomplish a multimedia session successfully is needed. The SIP based on a design idea of internet Client/Server (C/S) structure is an application signaling providing call control for the multimedia session; the session can be initiated, established and released by using the SIP; the SIP is widely applauded due to advantages of simpleness, flexibility and expandability.

However, in conventional fixed-line telephone services, a call transfer is set and performed in a manner which is too simple to be perfect. Therefore, how to design a call transfer method and a call transfer system with more comprehensive functions has become a question concerned by those skilled in the art.

US 2007/0250845 A1 discloses that a system and method of delivering calls. In a particular embodiment, the method includes receiving a call at a server within an Internet Protocol Television (IPTV) system, where the call is directed to a user premise. The method also includes determining a presence of a user at a set-top box device at the user premise and determining a speed select function associated with the user. The method also includes selectively delivering the call to a communication device in proximity to the set-top box device via a private access network of the IPTV system, based on the speed select function.

US 2009/0219953 A1 discloses that a method of allowing a non-IP-based network to interact with an IPTV-based network is provided. The method comprises: receiving an indication at an IPTV Mediation Application Server (IPTV Mediation AS) that a subscriber to IPTV service is watching television, wherein the television is connected to an IPTV set-top box (IPTV STB) in a home viewing network; receiving a call from a caller directed to a circuit switched communication device of the subscriber; suspending normal call processing and giving control of the call to the IPTV Mediation AS; interacting with the home viewing network and sending instructions to the IPTV STB regarding a pop-up message to be played on the television; receiving instructions for handling the call at the IPTV Mediation AS; and sending the instructions for handling the call to a service switching point.

### SUMMARY

The technical problem to be solved in the disclosure is to provide a method according to claim 1 and system according to claim 6 for performing a call transfer based on an SIP by an STB, in which a binding between a visual communication STB and a home or office fixed telephone is established and a call transfer is performed by a visual interface of the visual communication STB, such that user experience on conventional fixed telephone services can be improved.

In order to solve the technical problem above, the disclosure provides a method for performing a call transfer based on an SIP by an STB, which comprises the steps of: binding a called visual communication STB bound to a called user terminal; setting a target terminal number for the call transfer on the called visual communication STB; initiating, by a calling user terminal, a call to the called user terminal or the called visual communication STB; wherein the triggering the AS comprises: sending, by the calling user terminal, a triggering request to the AS; and initiating, by the AS, a call to both the called user terminal and the called visual communication STB, after receiving the triggering request;

triggering, by the calling user terminal, an application server (AS); after the called user terminal and the called visual communication STB receive a call from the AS, displaying an incoming call prompt on a visual interface of the visual communication STB; and selecting a call transfer function based on the incoming call prompt, so as to transfer the call.

Wherein setting a target terminal number for call transfer may comprise:
setting the target terminal number for call transfer corresponding to the called visual communication STB and/or the called user terminal, according to mode switching and transfer setting functions of the called visual communication STB.

In the method, the called visual communication STB may log on to an Internet Protocol (IP) Multimedia Subsystem (IMS) network after being turned on.

In the method, selecting, by the called user, the transfer function based on the incoming call prompt, so as to transfer the call may comprise: sending, by the called visual communication STB, a call transfer message to the AS, wherein the call transfer message includes the target terminal number for the call transfer; receiving and parsing, by the AS, the call transfer message to obtain the target terminal number; and initiating, by the AS, a call to the terminal corresponding to the target terminal number.

Wherein displaying an incoming call prompt on a visual interface of the visual communication STB may further comprises: ringing, by both the called user terminal and the called visual communication STB, an incoming ring tone; the method may further comprise: controlling both the called user terminal and the called visual communication STB to stop ringing after the call is transferred.

In order to solve the technical problem above, the disclosure further provides a system for performing a call transfer based on an SIP by an STB, which comprises: a visual communication STB, an AS and user terminals; wherein the visual communication STB is configured to set a target terminal number for the call transfer, to receive a call and display an incoming call prompt on a visual interface, and to select a call transfer function based on the incoming call prompt so as to transfer the call; the AS is configured to bind the called visual communication STB to the called user terminal, and to call the visual communication STB and the user terminal; and the calling user terminal is configured to call the called user terminal or the called visual communication STB and to trigger the AS;
the AS may further comprise: a binding module and a second calling module, in which, the binding module is configured to bind the called visual communication STB to the called user terminal; and the second calling module is configured to initiate a call to both the called user terminal and the called visual communication STB after receiving the triggering request.

In the system, the visual communication STB may further comprise: a setting module, a display module and a selecting module, in which, the setting module is configured to set the target terminal number for the call transfer; the display module is configured to display the incoming call prompt on the visual interface of the visual communication STB after the called user terminal and the called visual communication STB receive the call from the AS; and the selecting module is configured to select the call transfer function based on the incoming call prompt, so as to transfer the call;
the calling user terminal may further comprise: a first calling module and a triggering module, in which, the first calling module is configured to call the called user terminal or the called visual communication STB by the calling user terminal; and the triggering module is configured to send a triggering request to the AS when the first calling module calls the called user terminal or the called visual communication STB.

Wherein the called visual communication STB may further comprise: a second sending module configured to send a call transfer message to the AS, wherein the call transfer message comprises the target terminal number for the call transfer; the AS may further comprise: a first parsing module configured to parse out the target terminal number after receiving the call transfer message and to initiate a call to the terminal corresponding to the target terminal number.

In the system, the visual communication STB may further comprise: an audio signal module connected with the display module and configured to make both the called user terminal and the called visual communication STB ring an incoming ring tone; the AS may further comprise: a stop module configured to control both the called user terminal and the called visual communication STB to stop ringing.

Wherein the AS may further comprise: a first sending module arranged in the AS and configured to send a call invite message to the visual communication STB; the visual communication STB may further comprise: a second parsing module configured to parse the call invite message.

The disclosure strengthens experience of a user in aconventional user terminal service by establishing a binding relationship between the visual communication STB and the home or office fixed-line telephone and performing a call transfer by using a visual interface of the visual communication STB.

Compared with the prior art, the disclosure mainly has the following advantages:
simple scheme: the call transfer function in a caller ID display companion service can be implemented provided that the existing equipment supports the method provided in the disclosure;
easy implementation: due to the popularity of the family telephone, visual communication STB and television, the user does not need to add new equipment or change the network;
good compatibility: provided that the operator launches the call transfer service and the visual communication STB can be bound to the user telephone, the call transfer function in the caller ID display companion service can be implemented by the visual communication STB provided by this disclosure, in spite of any types of AS being used.

### BRIEF DESCRIPTION OF THE DRAWINGS

Fig. 1 is a structure diagram of a system applied by a method of the disclosure;
Fig. 2 is a flowchart of a call transfer of the disclosure;
Fig. 3 is a flowchart of an SIP signaling of the disclosure; and
Fig. 4 is a structure diagram of a system for performing a call transfer of the disclosure.

### DETAILED DESCRIPTION

The main idea of the disclosure is that: a user terminal of a Public Switching Telephone Network (PSTN) has a number, a visual communication STB has a number, and the two numbers of the called user terminal are bound together in an AS.

For example, a calling user terminal is a PSTN fixed terminal, for example, a fixed-line telephone (of course can also be a mobile user), a called user terminal is a PSTN fixed-line telephone and a visual communication STB, when the calling user terminal calls the PSTN fixed-line telephone or the visual communication STB of the called user terminal, this call triggers the AS which then calls the PSTN fixed-line telephone and the visual communication STB in a manner of co-vibration and then completes a call transfer function by a visual interface of the visual communication STB.

Due to advantages of the SIP, a telephone number is put in a CONTACT field of a response message 302 Moved Temporarily of the SIP, wherein the telephone number is a number for transferring the call just received to another telephone; in addition, the visual interface of the visual communication STB is configured to display an incoming call prompt box and perform visual interface operation so as to transfer a call.

For a basic signaling flow and a message format in the disclosure, please refer to descriptions in RFC 3261 (SIP).

Here, an SIP message is divided into a request message and a response message, in which, the response message consists of three figures, wherein six types of response messages starting from 1 to 6 respectively are: 1xx, 2xx, 3xx, 4xx, 5xx, and 6xx. Generally, the call transfer function in a caller ID display companion service is realized by using 3xx to forward the 302 transfer message in the request message, for example, the visual communication STB sends a 302 message to the AS; after receiving the 302 message, the AS parses the CONTACT field to obtain a target number for the call transfer and then performs the call transfer.

The technical scheme of the disclosure is further illustrated below in conjunction with the drawings and embodiments.

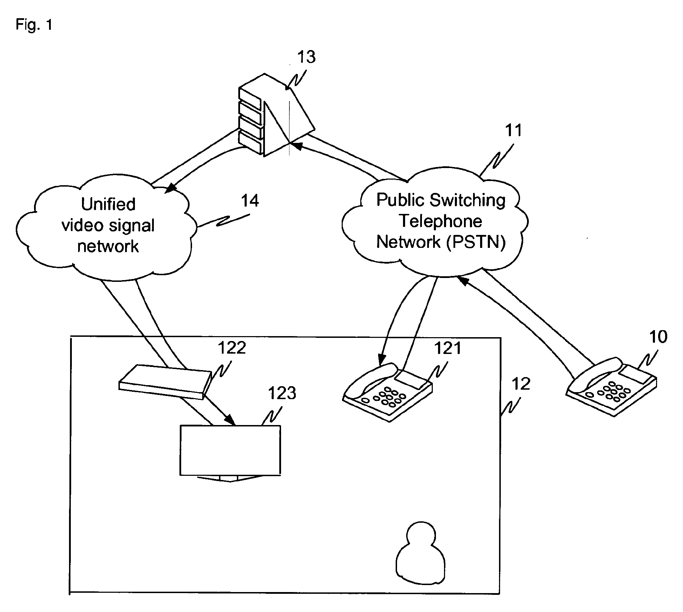

A structure diagram of a system applied by a method for performing a caller transfer in the disclosure is shown in Fig. 1. The system comprises: a calling user terminal 10, a PSTN 11, an AS 13, a unified video signal network 14 and a called user terminal 12;

The called user terminal 12 further comprises: a PSTN fixed-line telephone 121 and a visual communication STB 122, wherein the visual communication STB 122 is connected with a display screen 123, and the display screen 123 displays prompt information. In the embodiment, the calling user terminal 10 may be a PSTN fixed terminal (for example, a fixed-line telephone), and it may also be a mobile user terminal.

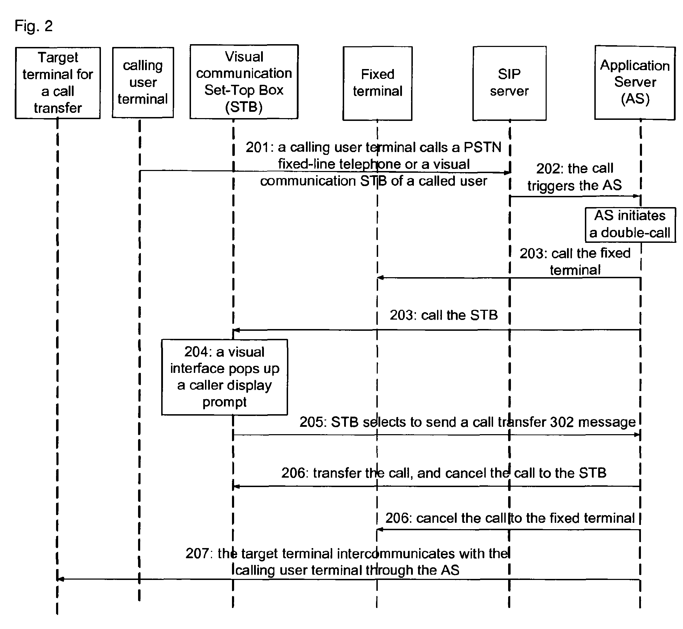

Refer to Fig. 2, a flowchart of a call transfer in a caller ID display companion service under the environment of Fig. 1 is shown; the flow of the call transfer in the embodiment is illustrated below in conjunction with Fig. 2.

It should be noted that before performing the call transfer in the embodiment both the calling party and called party may have the following configurations:
1) both the visual communication STB and the PSTN fixed-line telephone are IMS domain users with different terminal numbers; the service is triggered through the IMS; in addition, in the AS, the number of the visual communication STB can be bound with the number of the PSTN fixed-line telephone.
2) a target terminal number for a call transfer is set, and the target terminal number corresponds to the called visual communication STB and/or the called fixed-line telephone. The step of setting a target terminal number for a call transfer may comprise: according to mode switching and transfer setting functions of the called visual communication STB, setting a target terminal number for a call transfer corresponding to the called visual communication STB and/or the called user terminal.

For example, enter a video telephone main interface through the mode switching function on a handle of the visual communication STB, then enter the transfer setting function interface to set a target terminal number for a call transfer therein. Here, three types of numbers can be set: a fixed-line telephone number, a mobile telephone number and other telephone numbers.

The method for performing a call transfer in a caller ID display companion service based on an SIP by an STB provided by the disclosure mainly comprises the following steps.
Step 201: a calling user terminal calls a PSTN fixed-line telephone or a visual communication STB of a called user;
   wherein the visual communication STB or the fixed terminal serves as a called user terminal.
Step 202: the call initiated by the calling user terminal triggers an AS;
   when the calling user terminal calls the called fixed terminal or the called visual communication STB, the call form the calling user terminal sends a triggering request to the AS so as to trigger the AS.
Step 203: after receiving the triggering request, the AS initiates a call to both the PSTN fixed-line telephone and the visual communication STB of the called user;
   after receiving the triggering request, the AS initiates a call to both the called fixed-line telephone and the called visual communication STB.
Step 204: after receiving the call from the AS, the PSTN fixed-line telephone and the visual communication STB of the called user simultaneously prompt to the called user that a call is received, and a visual interface of the visual communication STB pops up a caller display prompt box;
   after receiving the call from the AS, the PSTN fixed-line telephone and the visual communication STB of the called user ring simultaneously, and a visual interface of the visual communication STB pops up a caller display prompt box.
Step 205: the called user selects a "call transfer" in the caller display prompt box through a handle or a remote controller of the visual communication STB, and sends a call transfer 302 message to the AS;
   wherein the call transfer 302 message comprises a target terminal number for the call transfer.
Step 206: after receiving the call transfer message, the AS transfers the call and controls both the PSTN fixed-line telephone and the visual communication STB to stop ringing;
   in step 206, after receiving the call transfer message, the AS parses out the target terminal number and initiates a call to the terminal corresponding to the target terminal number so as to transfer the call.
Step 207: the target terminal for the call transfer communicates with the calling user terminal through the AS.

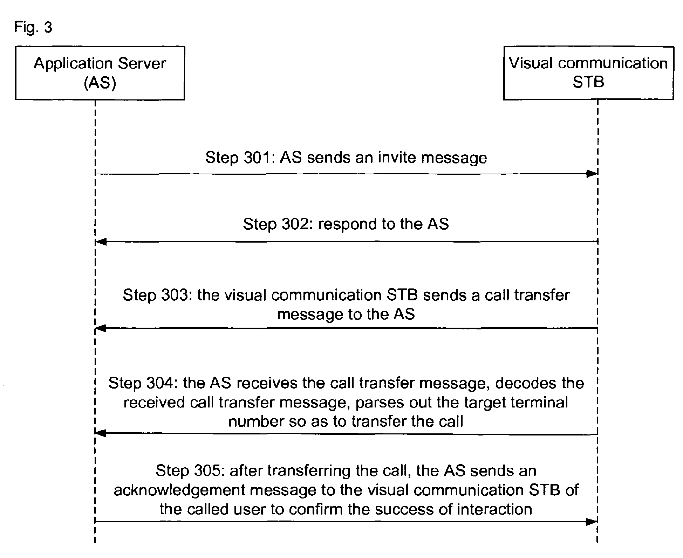

A flowchart of an SIP signaling for performing a call transfer is further illustrated below; refer to Fig. 3, a flowchart of an SIP signaling for performing a call transfer in a caller ID display companion service shown in Fig. 2 is illustrated. For convenience of description, an application server is called as AS for short.

It should be noted that, before the flowchart of the SIP signaling for performing a call transfer, the following setting is performed: the visual communication STB of the called user is registered into an IMS network after being started, and the visual communication STB is bound with the fixed-line telephone in the AS. The flowchart of the SIP signaling for performing a call transfer in the caller ID display companion service is as follows:
Step 301: the AS sends a call invite message to the visual communication STB;
   when the PSTN fixed-line telephone or the visual communication STB of the called user receives the call, the call triggers the AS which then calls the PSTN fixed-line telephone and the visual communication STB in a manner of co-vibration; at this moment, the AS sends a call invite message which does not include a Session Description Protocol (SDP) request message and invites the visual communication STB of the called user.
Step 302: the PSTN telephone or the visual communication STB of the called user prompts to the called user that a call is received, and the visual communication STB responds to the AS.
   In step 302, the PSTN telephone or the visual communication STB of the called user prompts to the called user that a ring tone of the call is received, and a visual interface of the visual communication STB displays an incoming call prompt box. At this moment, after receiving the call invite message, the visual communication STB interacts with the AS, responds in turn and sends 100 Trying, 180 Ringing to the AS.
Step 303: the visual communication STB sends a call transfer message to the AS;
   for example, select a "call transfer" key in the caller display prompt box by using a handle or a remote controller matched with the visual communication STB, then the visual communication STB sends a call transfer message such as 302 message to the AS; before sending the 302 message, the telephone number for the call transfer is stored in the CONTACT field of the 302 message, wherein the message is as follows:
   SIP/2.0 302 **Moved Temporarily**
   Via: SIP/2.0/UDP 10.40.5.1:5060;branch=z9hG4bKbf9f44
   From: 02566666666 <sip:02566666666@example.com>;tag=9fxced76sl
   To: <sip:02588888888@example.com>;tag=53fHlqlQ2
   Call-ID: 2xTb9vxSit55XU7p8@10.40.5.1
   CSeq: 1 INVITE
   **Contact: <sip:02599999999@example.com;transport=udp>**
   Content-Length: 0

It should be noted that the first line of the 302 message (boldfaced words) in the above message is a call transfer message, and a telephone number is put in the CONTACT field, wherein this number is the target terminal number for transferring the call to another terminal, specifically:
the first line of the above message is a message header, which indicates the type of the message;
"Via" marks transmission equipment for event transmission and also marks an address for a response;
"From" includes a logic mark of a request initiator;
"To" indicates the first and earliest specified and requested "logic" receiving location, or address-of-record of the user or resource of the request;
"Call-ID" is a unique mark for distinguishing a group of messages in a series of messages;
"Contact" provides an association method of a specific User Agent (UA) example accessing the following request: SIP or SIPS URI;
"Content-Length" indicates the length of message content.

The number in the message body is an assumed usage number.
Step 304: the AS receives the call transfer message, decodes the received call transfer message, parses out the target terminal number and transfers the call;
   after receiving the call transfer message, the AS decodes the received message, parses out the target terminal number in the CONTACT field of the call transfer message such as the 302 message and transfers the call.
Step 305: after transferring the call, the AS sends an Acknowledgement (ACK) message to the visual communication STB of the called user so as to confirm the success of interaction.

After transferring the call, the AS sends an ACK message to the visual communication STB of the called user, thus the two parties complete the interaction, and the AS controls both the PSTN fixed-line telephone and the visual communication STB to stop ringing.

In order to realize the method above, the disclosure further provides a system for performing a call transfer, which comprises: a visual communication STB, an AS and user terminals, wherein:
the visual communication STB is configured to set a target terminal number for the call transfer, to receive a call and display an incoming call prompt on a visual interface, and to select a call transfer function based on the incoming call prompt so as to transfer the call;
the AS is configured to bind the called visual communication STB to a called user terminal, and to call the visual communication STB and the user terminal; and
a calling user terminal is configured to call the called user terminal or the called visual communication STB and to trigger the AS.

In the system above, the visual communication STB further comprises: a setting module, a display module and a selecting module, wherein:
the setting module is configured to set the target terminal number for the call transfer;
the display module is configured to display the incoming call prompt on the visual interface of the visual communication STB after the called user terminal and the called visual communication STB receive the call from the AS; and
the selecting module is configured to select the call transfer function based on the incoming call prompt, so as to transfer the call;
the calling user terminal further comprises: a first calling module and a triggering module, wherein:
   the first calling module is configured to call the called user terminal or the called visual communication STB by the calling user terminal; and
   the triggering module is configured to send a triggering request to the AS when the first calling module calls the called user terminal or the called visual communication STB;
   the AS further comprises: a binding module and a second calling module, wherein:
      the binding module is configured to bind the called visual communication STB to the called user terminal; and
      the second calling module is configured to initiate a call to both the called user terminal and the called visual communication STB after receiving the triggering request;
      wherein the called visual communication STB further comprises: a second sending module configured to send a call transfer message to the AS, wherein the call transfer message includes the target terminal number for the call transfer;
      the AS further comprises: a first parsing module configured to parse out the target terminal number after receiving the call transfer message and to initiate a call to the terminal corresponding to the target terminal number;
      wherein the visual communication STB further comprises: an audio signal module connected with the display module and configured to make both the called user terminal and the called visual communication STB ring an incoming ring tone;
      the AS further comprises: a stop module configured to control both the called user terminal and the called visual communication STB to stop ringing.

The AS further comprises: a first sending module arranged in the AS and configured to send a call invite message to the visual communication STB;
the visual communication STB further comprises: a second parsing module configured to parse the call invite message.

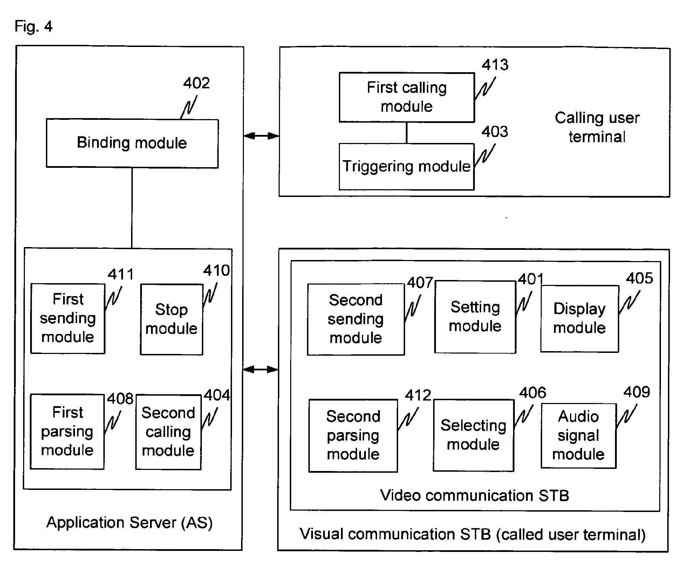

Refer to Fig. 4, a main structure of a system embodiment for performing a call transfer of the disclosure is illustrated, wherein the system comprises:
a setting module 401 arranged in a visual communication STB and configured to register a called visual communication STB into an IMS network and to set a target terminal number for the call transfer corresponding to the called visual communication STB and/or the called fixed-line telephone;
a binding module 402 arranged in an AS and configured to bind the called visual communication STB to the called fixed-line telephone in the AS;
a first calling module 413 arranged in the calling user terminal and configured to call the called user terminal or the called visual communication STB by the calling user terminal;
a triggering module 403 arranged in the calling user terminal and configured to send a triggering request to the AS when the calling user terminal calls the called fixed-line telephone or the called visual communication STB;
a second calling module 404 arranged in the AS and configured to initiate a call to both the called fixed-line telephone and the called visual communication STB after receiving the triggering request;
a display module 405 arranged in the called visual communication STB and configured to display an incoming call prompt on a visual interface of the visual communication STB after the called fixed-line telephone and the called visual communication STB receive the call from the AS;
a selecting module 406 arranged in the called visual communication STB and configured to select a call transfer function based on the incoming call prompt, so as to transfer the call.

In a preferred embodiment of the disclosure, the called visual communication STB further comprises:
a second sending module 407 arranged in the called visual communication STB and configured to send a call transfer message to the AS, wherein the call transfer message comprises the target terminal number for the call transfer;
correspondingly, the AS further comprises: a first parsing module 408 configured to parse out the target terminal number after receiving the call transfer message and to initiate a call to the terminal corresponding to the target terminal number.

In a preferred embodiment of the disclosure, the system further comprises:
an audio signal module 409 connected with the display module and configured to make both the called user terminal and the called visual communication STB ring an incoming ring tone.
a stop module 410 arranged in the AS and configured to control both the called fixed-line telephone and the called visual communication STB to stop ringing.

In a preferred embodiment of the disclosure, the system further comprises: a first sending module 411 arranged in the AS and configured to send a call invite message to the visual communication STB;
correspondingly, the visual communication STB further comprises: a second parsing module 412 configured to parse the call invite message.

The above is only the specific implementation involved in the disclosure; however, the protection scope of the disclosure is not limited to the above; any changes and substitutes easily thought by those skilled in the art within the technical scope of the disclosure are deemed to be included within the protection scope of the claims attached in the disclosure.

## Claims

1. A method for performing a call transfer based on a Session Initial Protocol, SIP by a Set-Top Box, STB, **characterized in that** comprising:
binding a called visual communication STB bound to a called user terminal;
setting a target terminal number for the call transfer on the called visual communication STB;
initiating, by a calling user terminal, a call to the called user terminal or the called visual communication STB (S201);
triggering, by the calling user terminal, an application server, AS (S202); wherein the triggering the AS comprises: sending, by the calling user terminal, a triggering request to the AS; and initiating, by the AS, a call to both the called user terminal and the called visual communication STB, after receiving the triggering request;
after the called user terminal and the called visual communication STB receive a call from the AS (S203), displaying an incoming call prompt on a visual interface of the visual communication STB (S204); and
selecting a call transfer function based on the incoming call prompt (S205), so as to transfer the call (S206).

2. The method according to claim 1, wherein the step of setting a target terminal number for call transfer on the called visual communication STB comprises:
setting the target terminal number for call transfer corresponding to the called visual communication STB and/or the called user terminal, according to mode switching and transfer setting functions of the called visual communication STB.

3. The method according to claim 1, wherein the called visual communication STB logs on to an Internet Protocol, IP Multimedia Subsystem, IMS network after being turned on.

4. The method according to any of claims 1 to 3, wherein selecting, by the called user, the transfer function based on the incoming call prompt, so as to transfer the call comprises:
sending, by the called visual communication STB, a call transfer message to the AS, wherein the call transfer message includes the target terminal number for the call transfer; and
receiving and parsing, by the AS, the call transfer message to obtain the target terminal number; and
initiating, by the AS, a call to the terminal corresponding to the target terminal number.

5. The method according to claim 4, wherein displaying an incoming call prompt on a visual interface of the visual communication STB further comprises: ringing, by both the called user terminal and the called visual communication STB, an incoming ring tone;
the method further comprises: controlling both the called user terminal and the called visual communication STB to stop ringing after the call is transferred.

6. A system for performing a call transfer based on an SIP by a Set-Top Box, STB, comprising: a visual communication STB, an application server, AS and user terminals including a calling user terminal and a called user terminal, **characterized in that**:
the visual communication STB is configured to set a target terminal number for the call transfer, to receive a call and display an incoming call prompt on a visual interface, and to select a call transfer function based on the incoming call prompt so as to transfer the call;
the AS is configured to bind the called visual communication STB to the called user terminal, and to call the visual communication STB and the user terminal; and
the calling user terminal is configured to call the called user terminal or the called visual communication STB and to trigger the AS;
wherein the AS further comprises: a binding module (402) and a second calling module (404), in which,
the binding module (402) is configured to bind the called visual communication STB to the called user terminal; and
the second calling module (404) is configured to initiate a call to both the called user terminal and the called visual communication STB after receiving the triggering request.

7. The system according to claim 6, wherein the visual communication STB further comprises: a setting module (401), a display module (405) and a selecting module (406), in which,
the setting module (401) is configured to set the target terminal number for the call transfer;
the display module (405) is configured to display the incoming call prompt on the visual interface of the visual communication STB after the called user terminal and the called visual communication STB receive the call from the AS; and
the selecting module (406) is configured to select the call transfer function based on the incoming call prompt, so as to transfer the call;
the calling user terminal further comprises: a first calling module (413) and a triggering module (403), in which,
the first calling module (413) is configured to call the called user terminal or the called visual communication STB by the calling user terminal; and
the triggering module (403) is configured to send a triggering request to the AS when the first calling module calls the called user terminal or the called visual communication STB.

8. The system according to claim 7, wherein the called visual communication STB further comprises: a second sending module (407) configured to send a call transfer message to the AS, wherein the call transfer message comprises the target terminal number for the call transfer;
the AS further comprises: a first parsing module (408) configured to parse out the target terminal number after receiving the call transfer message and to initiate a call to the terminal corresponding to the target terminal number.

9. The system according to claim 7, wherein the visual communication STB further comprises: an audio signal module (409) connected with the display module and configured to make both the called user terminal and the called visual communication STB ring an incoming ring tone;
the AS further comprises: a stop module configured (410) to control both the called user terminal and the called visual communication STB to stop ringing.

10. The system according to claim 8, wherein the AS further comprises: a first sending module (411) arranged in the AS and configured to send a call invite message to the visual communication STB;
the visual communication STB further comprises: a second parsing module (412) configured to parse the call invite message.

## Patentansprüche

1. Verfahren zum Durchführen einer Rufumleitung auf Basis eines Session Initial Protocol, SIP, durch eine Set-Top-Box, STB, **dadurch gekennzeichnet, dass** es umfasst:
Binden einer angerufenen STB für visuelle Kommunikation, die an einen angerufenen Benutzeranschluss gebunden ist;
Festlegen einer Zielanschlussnummer für die Rufumleitung auf der angerufenen STB für visuelle Kommunikation;
Einleiten eines Anrufs an den angerufenen Benutzeranschlusses oder an die angerufene STB für visuelle Kommunikation durch Anrufen eines Benutzeranschlusses (S201);
Aktivieren eines Anwendungsservers, AS, durch Anrufen eines Benutzeranschlusses (S202); wobei das Aktivieren des AS umfasst: Senden einer Aktivierungsanfrage durch Anrufen eines Benutzeranschlusses an den AS; und Einleiten eines Anrufs sowohl an den angerufenen Benutzeranschluss als auch die angerufene STB für visuelle Kommunikation durch den AS nach Empfangen der Aktivierungsanfrage;
nachdem der angerufene Benutzeranschluss und die angerufene STB für visuelle Kommunikation einen Anruf vom AS erhalten haben (S203), Anzeigen einer Anfrage eines eingehenden Anrufs auf einer visuellen Schnittstelle der STB für visuelle Kommunikation (S204); und
Auswählen einer Rufumleitungsfunktion auf Basis der Anfrage eines eingehenden Anrufs (S205), um den Anruf umzuleiten (S206).

2. Verfahren nach Anspruch 1, wobei der Schritt des Festlegens einer Zielanschlussnummer für eine Rufumleitung auf der angerufenen STB für visuelle Kommunikation umfasst:
Festlegen der Zielanschlussnummer für die Rufumleitung in Entsprechung mit der angerufenen STB für visuelle Kommunikation und/oder dem angerufenen Benutzeranschluss gemäß Modusschalt- und Umleitungsfestlegungsfunktionen der angerufenen STB für visuelle Kommunikation.

3. Verfahren nach Anspruch 1, wobei sich die angerufene STB für visuelle Kommunikation in einem Internet-Prototocol-IP-Multimedia-Subsystem-IMS-Netzwerk anmeldet, nachdem sie eingeschaltet wurde.

4. Verfahren nach einem der Ansprüche 1 bis 3, wobei das Auswählen der Umleitungsfunktion durch den angerufenen Benutzer auf Basis der Anfrage eines eingehenden Anrufs, um den Anruf umzuleiten, umfasst:
Senden einer Rufumleitungsnachricht durch die angerufene STB für visuelle Kommunikation an den AS, wobei die Rufumleitungsnachricht die Zielanschlussnummer für die Rufumleitung beinhaltet; und
Empfangen und Parsen der Rufumleitungsnachricht durch den AS, um die Zielanschlussnummer zu erhalten; und
Einleiten eines Anrufs an den Anschluss, der der Zielanschlussnummer entspricht, durch den AS.

5. Verfahren nach Anspruch 4, wobei das Anzeigen einer Anfrage eines eingehenden Anrufs auf einer visuellen Schnittstelle der STB für visuelle Kommunikation des Weiteren umfasst: Läuten eines Klingeltons für eingehende Anrufe durch sowohl den angerufenen Benutzeranschluss als auch die angerufene STB für visuelle Kommunikation;
wobei das Verfahren des Weiteren umfasst: Steuern sowohl des angerufenen Benutzeranschlusses als auch der angerufenen STB für visuelle Kommunikation, um das Läuten nach Umleitung des Anrufs zu stoppen.

6. System zum Durchführen einer Rufumleitung auf Basis eines SIP durch eine Set-Top-Box, STB, das umfasst: eine STB für visuelle Kommunikation, einen Anwendungsserver, AS, und Benutzeranschlüsse, die einen anrufenden Benutzeranschluss und einen angerufenen Benutzeranschluss beinhalten, **dadurch gekennzeichnet, dass**:
die STB für visuelle Kommunikation so konfiguriert ist, dass sie eine Zielanschlussnummer für die Rufumleitung festlegt, einen Anruf empfängt und eine Anfrage eines eingehenden Anrufs auf einer visuellen Schnittstelle anzeigt und eine Rufumleitungsfunktion auf Basis der Anfrage eines eingehenden Anrufs auswählt, um den Anruf umzuleiten;
wobei der AS so konfiguriert ist, dass er die angerufene STB für visuelle Kommunikation an den angerufenen Benutzeranschluss bindet und die STB für visuelle Kommunikation und den Benutzeranschluss anruft; und
der anrufende Benutzeranschluss so konfiguriert ist, dass er den angerufenen Benutzeranschluss oder die angerufene STB für visuelle Kommunikation anruft und den AS aktiviert;
wobei der AS des Weiteren umfasst: ein Bindemodul (402) und ein zweites Anrufmodul (404), wobei:
das Bindemodul (402) so konfiguriert ist, dass es die angerufene STB für visuelle Kommunikation an den angerufenen Benutzeranschluss bindet; und
das zweite Anrufmodul (404) so konfiguriert ist, dass es nach Empfangen der Aktivierungsanfrage einen Anruf sowohl an den angerufenen Benutzeranschluss als auch die angerufene STB für visuelle Kommunikation einleitet.

7. System nach Anspruch 6, wobei die STB für visuelle Kommunikation des Weiteren umfasst: ein Festlegemodul (401), ein Anzeigemodul (405) und ein Auswählmodul (406), wobei:
das Festlegemodul (401) so konfiguriert ist, dass es die Zielanschlussnummer für die Rufumleitung festlegt;
das Anzeigemodul (405) so konfiguriert ist, dass es die Anfrage eines eingehenden Anrufs auf der visuellen Schnittstelle der STB für visuelle Kommunikation anzeigt, nachdem der angerufene Benutzeranschluss und die angerufene STB für visuelle Kommunikation den Anruf vom AS empfangen haben; und
das Auswählmodul (406) so konfiguriert ist, dass es die Rufumleitungsfunktion auf Basis der Anfrage eines eingehenden Anrufs auswählt, um den Anruf umzuleiten;
der anrufende Benutzeranschluss des Weiteren umfasst: ein erstes Anrufmodul (413) und ein Aktivierungsmodul (403), wobei
das erste Anrufmodul (413) so konfiguriert ist, dass es den angerufenen Benutzeranschluss oder die angerufene STB für visuelle Kommunikation durch den anrufenden Benutzeranschluss anruft; und
das Aktivierungsmodul (403) so konfiguriert ist, dass es eine Aktivierungsanfrage an den AS sendet, wenn das erste Anrufmodul den angerufenen Benutzeranschluss oder die angerufene STB für visuelle Kommunikation anruft.

8. System nach Anspruch 7, wobei die angerufene STB für visuelle Kommunikation des Weiteren umfasst: ein zweites Sendemodul (407), das so konfiguriert ist, dass es eine Rufumleitungsnachricht an den AS sendet, wobei die Rufumleitungsnachricht die Zielanschlussnummer für die Rufumleitung umfasst;
wobei der AS des Weiteren umfasst: ein erstes Parsingmodul (408), das so konfiguriert ist, dass es nach Empfangen der Rufumleitungsnachricht die Zielanschlussnummer herausparst und einen Anruf an den Anschluss einleitet, der der Zielanschlussnummer entspricht.

9. System nach Anspruch 7, wobei die STB für visuelle Kommunikation des Weiteren umfasst: ein Audiosignalmodul (409), das mit dem Anzeigemodul verbunden und so konfiguriert ist, dass es bewirkt, dass sowohl der angerufene Benutzeranschluss als auch die angerufene STB für visuelle Kommunikation einen Klingelton für eingehende Anrufe läutet;
wobei der AS des Weiteren umfasst: ein Stoppmodul (410), um sowohl den angerufenen Benutzeranschluss (411) als auch die angerufene STB für visuelle Kommunikation zu steuern, so dass sie das Läuten stoppen.

10. System nach Anspruch 8, wobei der AS des Weiteren umfasst: ein erstes Sendemodul (411), das im AS angeordnet und so konfiguriert ist, dass es eine Anrufeinladungsnachricht an die STB für visuelle Kommunikation sendet;
wobei die STB für visuelle Kommunikation des Weiteren umfasst: ein zweites Parsingmodul (412), das so konfiguriert ist, dass es die Anrufeinladungsnachricht parst.

## Revendications

1. Procédé de mise en oeuvre d'un transfert d'appel basé sur un protocole d'ouverture de session, SIP, par un boîtier décodeur, STB, **caractérisé en ce qu'**il comprend les étapes ci-dessous consistant à :
lier un boîtier STB de communication visuelle appelé à un terminal d'utilisateur appelé ;
configurer un numéro de terminal cible pour le transfert d'appel sur le boîtier STB de communication visuelle appelé ;
initier, par le biais d'un terminal d'utilisateur appelant, un appel au terminal d'utilisateur appelé ou au boîtier STB de communication visuelle appelé (S201) ;
déclencher, par le biais du terminal d'utilisateur appelant, un serveur d'application, AS (S202) ; dans lequel le déclenchement du serveur AS comprend : l'envoi, par le terminal d'utilisateur appelant, d'une demande de déclenchement, au serveur AS ; et l'initiation, par le serveur AS, d'un appel à la fois au terminal d'utilisateur appelé et au boîtier STB de communication visuelle appelé, suite à la réception de la demande de déclenchement ;
suite à la réception, par le terminal d'utilisateur appelé et le boîtier STB de communication visuelle appelé, d'un appel en provenance du serveur AS (S203), afficher un message d'invite d'appel entrant sur une interface visuelle du boîtier STB de communication visuelle (S204) ; et
sélectionner une fonction de transfert d'appel sur la base du message d'invite d'appel entrant (S205), de manière à transférer l'appel (S206).

2. Procédé selon la revendication 1, dans lequel l'étape de configuration d'un numéro de terminal cible en vue d'un transfert d'appel sur le boîtier STB de communication visuelle appelé comprend l'étape ci-dessous consistant à :
configurer le numéro de terminal cible en vue d'un transfert d'appel, correspondant au boîtier STB de communication visuelle appelé et/ou au terminal d'utilisateur appelé, selon des fonctions de configuration de transfert et de commutation de mode du boîtier STB de communication visuelle appelé.

3. Procédé selon la revendication 1, dans lequel le boîtier STB de communication visuelle appelé se connecte sur un réseau de sous-système multimédia de protocole Internet, IP, IMS, après avoir été mis sous tension.

4. Procédé selon l'une quelconque des revendications 1 à 3, dans lequel l'étape de sélection, par le terminal d'utilisateur appelé, de la fonction de transfert sur la base du message d'invite d'appel entrant, de manière à transférer l'appel, comprend les étapes ci-dessous consistant à :
envoyer, par le biais du boîtier STB de communication visuelle appelé, un message de transfert d'appel, au serveur AS, dans lequel le message de transfert d'appel inclut le numéro de terminal cible pour le transfert d'appel ; et
recevoir et analyser, par le biais du serveur AS, le message de transfert d'appel, en vue d'obtenir le numéro de terminal cible ; et
initier, par le biais du serveur AS, un appel au terminal correspondant au numéro de terminal cible.

5. Procédé selon la revendication 4, dans lequel l'étape d'affichage d'un message d'invite d'appel entrant sur une interface visuelle du boîtier STB de communication visuelle comprend en outre l'étape consistant à : émettre, à la fois par le terminal d'utilisateur appelé et le boîtier STB de communication visuelle appelé, une sonnerie entrante ;
le procédé comportant en outre l'étape consistant à : commander à la fois au terminal d'utilisateur appelé et au boîtier STB de communication visuelle appelé d'arrêter la sonnerie une fois l'appel transféré.

6. Système pour mettre en oeuvre un transfert d'appel basé sur le protocole SIP par un boîtier décodeur, STB, comprenant : un boîtier STB de communication visuelle, un serveur d'application, AS, et des terminaux d'utilisateur incluant un terminal d'utilisateur appelant et un terminal d'utilisateur appelé, **caractérisé en ce que** :
le boîtier STB de communication visuelle est configuré de manière à configurer un numéro de terminal cible en vue du transfert d'appel, à recevoir un appel, à afficher un message d'invite d'appel entrant sur une interface visuelle, et à sélectionner une fonction de transfert d'appel sur la base du message d'invite d'appel entrant de manière à transférer l'appel ;
le serveur AS est configuré de manière à lier le boîtier STB de communication visuelle appelé au terminal d'utilisateur appelé, et à appeler le boîtier STB de communication visuelle et le terminal d'utilisateur ; et
le terminal d'utilisateur appelant est configuré de manière à appeler le terminal d'utilisateur appelé ou le boîtier STB de communication visuelle appelé et à déclencher le serveur AS ;
dans lequel le serveur AS comprend en outre : un module de liaison (402) et un second module d'appel (404), dans lequel,
le module de liaison (402) est configuré de manière à lier le boîtier STB de communication visuelle appelé au terminal d'utilisateur appelé ; et
le second module d'appel (404) est configuré de manière à initier un appel à la fois au terminal d'utilisateur appelé et au boîtier STB de communication visuelle appelé, une fois la demande de déclenchement reçue.

7. Système selon la revendication 6, dans lequel le boîtier STB de communication visuelle comprend en outre: un module de configuration (401), un module d'affichage (405) et un module de sélection (406), dans lequel,
le module de configuration (401) est configuré de manière à configurer le numéro de terminal cible en vue du transfert d'appel ;
le module d'affichage (405) est configuré de manière à afficher le message d'invite d'appel entrant sur l'interface visuelle du boîtier STB de communication visuelle après que le terminal d'utilisateur appelé et le boîtier STB de communication visuelle appelé ont reçu l'appel en provenance du serveur AS ; et
le module de sélection (406) est configuré de manière à sélectionner la fonction de transfert d'appel sur la base du message d'invite d'appel entrant, de manière à transférer l'appel ;
le terminal d'utilisateur appelant comprend en outre : un premier module d'appel (413) et un module de déclenchement (403), dans lequel,
le premier module d'appel (413) est configuré de manière à appeler le terminal d'utilisateur appelé ou le boîtier STB de communication visuelle appelé, par le biais du terminal d'utilisateur appelant ; et
le module de déclenchement (403) est configuré de manière à envoyer une demande de déclenchement au serveur AS lorsque le premier module d'appel appelle le terminal d'utilisateur appelé ou le boîtier STB de communication visuelle appelé.

8. Système selon la revendication 7, dans lequel le boîtier STB de communication visuelle appelé comprend en outre : un second module d'envoi (407) configuré de manière à envoyer un message de transfert d'appel au serveur AS, dans lequel le message de transfert d'appel comprend le numéro de terminal cible en vue du transfert d'appel ;
le serveur AS comprend en outre : un premier module d'analyse (408) configuré de manière à analyser le numéro de terminal cible, une fois le message de transfert d'appel reçu, et à initier un appel au terminal correspondant au numéro de terminal cible.

9. Système selon la revendication 7, dans lequel le boîtier STB de communication visuelle comprend en outre : un module de signal audio (409) connecté au module d'affichage, et configuré de manière à amener à la fois le terminal d'utilisateur appelé et le boîtier STB de communication visuelle appelé à émettre une sonnerie entrante ;
le serveur AS comprend en outre : un module d'arrêt configuré (410) de manière à commander à la fois au terminal d'utilisateur appelé et au boîtier STB de communication visuelle appelé d'arrêter de sonner.

10. Système selon la revendication 8, dans lequel le serveur AS comprend en outre: un premier module d'envoi (411) agencé dans le serveur AS et configuré de manière à envoyer un message d'invite d'appel au boîtier STB de communication visuelle ;
le boîtier STB de communication visuelle comprend en outre : un second module d'analyse (412) configuré de manière à analyser le message d'invite d'appel.
